# EUROPEAN PATENT SPECIFICATION

(11) **EP 3 188 379 B1**
(45) Date of publication and mention of the grant of the patent: **14.08.2019**
(21) Application number: 14902876.3
(22) Date of filing: 25.09.2014
(51) Int. Cl.: H04W 74/08, H04W 48/08, H04B 7/26

(54) **RANDOM ACCESS METHOD, NETWORK DEVICE AND USER EQUIPMENT**
DIREKTZUGRIFFSVERFAHREN, NETZWERKVORRICHTUNG UND BENUTZERGERÄT
PROCÉDÉ D'ACCÈS ALÉATOIRE, DISPOSITIF DE RÉSEAU ET ÉQUIPEMENT UTILISATEUR

(43) Date of publication of application: 05.07.2017
(73) Proprietor: Huawei Technologies Co., Ltd., Longgang District Shenzhen, Guangdong 518129 (CN)
(72) Inventor: ZHU, Song, Shenzhen Guangdong 518129 (CN); WANG, Juan, Shenzhen Guangdong 518129 (CN)
(74) Representative: Pfenning, Meinig & Partner mbB
(86) International application number: PCT/CN2014/087455
(87) International publication number: WO 2016/045063

(56) References cited:
- CA-A1- 2 722 781
- CN-A- 101 128 062
- CN-A- 101 374 086
- CN-A- 103 609 156
- US-A1- 2007 155 390
- US-A1- 2009 197 610
- US-A1- 2014 133 443

## Description

### TECHNICAL FIELD

Embodiments of the present invention relate to the communications technologies, and in particular, to a random access method, a network device, and user equipment.

### BACKGROUND

In a wireless communications system, before exchanging data with a network side device, a terminal needs to establish a wireless connection with the network side device by using a random access (Random Access, RA for short) process, so that the terminal and the network side device are in a connected state, and then, the terminal establishes a data communication connection with the network side device.

In the prior art, a terminal mostly accesses a network side device in a preamble sequence (Preamble) manner by using a random access process. Actually, the preamble sequence manner is as follows: The network side device feeds back a response message to the terminal after receiving a preamble sequence sent by the terminal, and the terminal sends a random access message or a resource request message to the network side device after receiving the response message, so that the network side device allocates a dedicated resource to the terminal.

In this context, the US 2007/015391 A1 discloses a method, user equipment, network equipment, and a system for initiating wireless connection and subsequent communication over a shared physical resource in a wireless communication system between user equipment and network equipment, comprising: Processing a UE-derived temporary identifier, communicating the temporary identifier as an identifier to the network equipment, communicating a downlink message conveying the temporary identifier and a description of a scheduled resource on a shared channel, where the scheduled resource comprises a resource allocated to the user equipment by the network equipment, and communicating data on the scheduled resource in response to the downlink message. Therein, the network may allocate a replacement temporary ID to the UE. Furthermore, an establishment cause parameter may be used by the network to allocate the physical resource.

The CA 2 722 781 A1 discloses a method for transmitting MAC PDUs where, with respect to generating and sending a MAC PDU by using the radio resources allocated to the mobile terminal, the level of priority between the buffer status report (BSR) and the established vertical channels are defined such that the data of each logical channel and buffer status report can be more effectively, efficiently and quickly transmitted.

The US 2014/0133443 A1 discloses a user equipment sending a random access preamble for system access, where the random access preamble may include a random identifier, a channel quality indicator or alike. The UE may randomly select the random ID or may be assigned to this random ID. The UE receives the random access response from a base station which may be sent in two parts within two messages and include control channel resources, uplink resources, and/or control information for the UE.

However, because the preamble sequence is actually multiple times of repetition of a feature code selected by the terminal, the preamble sequence occupies a relatively large quantity of bits. Consequently, a relatively large quantity of resources are used for random access that is based on the preamble sequence manner, and signaling overheads are high.

### SUMMARY

Embodiments of the present invention provide a random access method, a network device, and user equipment, to resolve existing problems that a relatively large quantity of resources are used for random access and signaling overheads are high.

The present invention is defined by independent claims 1, 5, 9, 13, to which reference should now be made. Further enhancements are characterized by the dependent claims.

According to a first aspect, an aspect of the present invention provides a random access method, including:
receiving, by a network device, identification information sent by user equipment UE according to an access status;
allocating, by the network device, a first access network identifier to the UE according to the identification information;
sending, by the network device, the first access network identifier to the UE; and
allocating, by the network device, a resource to the UE according to the first access network identifier.

According to the first aspect, in a first possible implementation manner of the first aspect, the receiving, by a network device, identification information sent by UE according to an access status includes:
receiving, by the network device, the identification information sent by the UE according to the access status by using an uplink channel resource.

According to the first possible implementation manner of the first aspect, in a second possible implementation manner, the uplink channel resource includes a time-frequency resource used for random access.

According to the first or the second possible implementation manner of the first aspect, in a third possible implementation manner, the method further includes:
receiving, by the network device, buffer status report BSR information sent by the UE by using the uplink channel resource, where the BSR information includes a size of to-be-sent data of the UE; and
correspondingly, the allocating, by the network device, a first access network identifier to the UE according to the identification information includes:
   allocating, by the network device, the first access network identifier to the UE according to the identification information and the BSR information.

According to a second aspect, an aspect of the present invention provides a random access method, including:
sending, by UE, identification information to a network device according to an access status; and
receiving, by the UE, a first access network identifier sent by the network device, where the first access network identifier is an access network identifier allocated by the network device to the UE according to the identification information, and the first access network identifier is used for the network device to allocate a resource to the UE.

According to the second aspect, in a first possible implementation manner of the second aspect, the sending, by UE, identification information to a network device according to an access status includes:
sending, by the UE, the identification information to the network device according to the access status by using an uplink channel resource.

According to the first possible implementation manner of the second aspect, in a second possible implementation manner, the uplink channel resource includes a time-frequency resource used for random access.

According to the first or the second possible implementation manner of the second aspect, in a third possible implementation manner, the method further includes:
sending, by the UE, BSR information to the network device by using the uplink channel resource, where the BSR information is used for the network device to allocate the first access network identifier to the UE with reference to the identification information, and the BSR information includes a size of to-be-sent data of the UE.

According to a third aspect, an aspect of the present invention provides a network device, including a receiving module, an allocation module, and a sending module, where the receiving module, the allocation module, and the sending module are successively connected;
the receiving module is configured to: receive identification information sent by UE according to an access status, and send the identification information to the allocation module;
the allocation module is configured to: allocate a first access network identifier to the UE according to the identification information, and send the first access network identifier to the sending module;
the sending module is configured to send the first access network identifier to the UE; and
the allocation module is further configured to allocate a resource to the UE according to the first access network identifier.

According to the third aspect, in a first possible implementation manner of the third aspect, the receiving module is further configured to receive the identification information sent by the UE according to the access status by using an uplink channel resource.

According to the first possible implementation manner of the third aspect, in a second possible implementation manner, the uplink channel resource includes a time-frequency resource used for random access.

According to the first or the second possible implementation manner of the third aspect, in a third possible implementation manner,
the receiving module is further configured to: receive BSR information sent by the UE by using the uplink channel resource, and send the BSR information to the allocation module, where the BSR information includes a size of to-be-sent data of the UE; and
correspondingly, the allocation module is further configured to allocate the first access network identifier to the UE according to the identification information and the BSR information.

According to a fourth aspect, an aspect of the present invention further provides UE, including a sending module and a receiving module, where the sending module and the receiving module are connected;
the sending module is configured to send identification information to a network device according to an access status; and
the receiving module is configured to receive a first access network identifier sent by the network device, where the first access network identifier is an access network identifier allocated by the network device to the UE according to the identification information, and the first access network identifier is used for the network device to allocate a resource to the UE.

According to the fourth aspect, in a first possible implementation manner, the sending module is further configured to send the identification information to the network device according to the access status by using an uplink channel resource.

According to the first possible implementation manner of the fourth aspect, in a second possible implementation manner, the uplink channel resource includes a time-frequency resource used for random access.

According to the first or the second possible implementation manner of the fourth aspect, in a third possible implementation manner, the sending module is further configured to send BSR information to the network device by using the uplink channel resource, where the BSR information is used for the network device to allocate the first access network identifier to the UE with reference to the identification information, and the BSR information includes a size of to-be-sent data

According to the random access method, the network device, and the user equipment in the embodiments of the present invention, the network device only needs to allocate a first access network identifier to UE according to received identification information sent by the UE according to an access status, send the first access network identifier to the UE, and then allocate a resource to the UE according to the first access network identifier, so that resources used for accessing the network device by the UE can be reduced, and signaling overheads can be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a random access method according to Embodiment 1 of the present invention;
FIG. 2 is a flowchart of a random access method according to Embodiment 2 of the present invention;
FIG. 3 is a flowchart of a random access method according to Embodiment 3 of the present invention;
FIG. 4 is a flowchart of a random access method according to Embodiment 4 of the present invention;
FIG. 5 is a flowchart of a random access method according to Embodiment 5 of the present invention;
FIG. 6 is a flowchart of a random access method according to Embodiment 6 of the present invention;
FIG. 7 is a flowchart of another random access method according to Embodiment 6 of the present invention;
FIG. 8 is a flowchart of still another random access method according to Embodiment 6 of the present invention;
FIG. 9 is a schematic structural diagram of a network device according to Embodiment 7 of the present invention;
FIG. 10 is a schematic structural diagram of UE according to Embodiment 8 of the present invention;
FIG. 11 is a schematic structural diagram of a network device according to Embodiment 9 of the present invention; and
FIG. 12 is a schematic structural diagram of UE according to Embodiment 10 of the present invention.

### DESCRIPTION OF EMBODIMENTS

### Embodiment 1

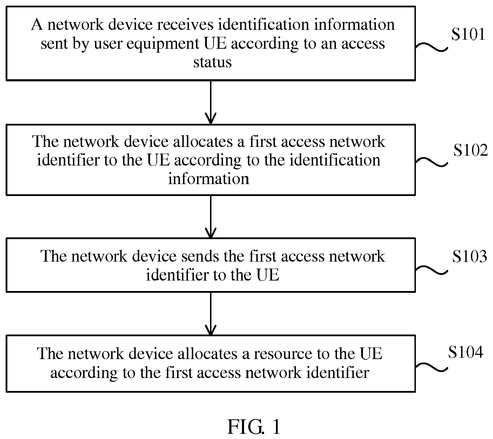

FIG. 1 is a flowchart of a random access method according to Embodiment 1 of the present invention. The method may be applied to a scenario, for example, in which user equipment (User Equipment, UE for short) initially accesses a network, a connection is interrupted and user equipment accesses a network again, user equipment has accessed a network but there is no uplink channel resource, and the user equipment accesses the network again to apply for a resource, or a cell handover is performed or a base station is reselected. The method may be executed by a network device. The network device may be an access network device such as a base station. As shown in FIG. 1, the method specifically includes the following steps.

Step 101: The network device receives identification information sent by user equipment UE according to an access status.

Specifically, UE has different access statuses in different application scenarios, and UE in different access statuses has different identification information.

Step 102: The network device allocates a first access network identifier to the UE according to the identification information.

The first access network identifier may be identification information that is allocated by the network device and that is required by the UE to access a network, transmit uplink information, or receive downlink information sent by the network device. That the network device allocates the first access network identifier to the UE according to the identification information is actually allocating a resource corresponding to the first access network identifier to the UE according to the identification information. In the prior art, a network device first needs to receive a preamble sequence (Preamble) sent by UE, and send a random access response message. After receiving the message, the UE sends a radio resource control (Radio Resource Control, RRC for short) connection request message. In addition, a conflict resolution mechanism is needed to resolve a collision problem caused by selection of a same preamble sequence by different UE. However, in this embodiment solution, the network device does not need to receive a preamble sequence (Preamble) sent by the UE, and does not need to return a response message to the UE, either, that is, the network device may allocate the access network identifier to the UE directly according to the identification information sent by the UE, and allocate a resource to the UE according to the allocated access network identifier. Therefore, in this embodiment solution, resources used in a random access process can be reduced, and signaling overheads can be reduced.

Step 103: The network device sends the first access network identifier to the UE.

The network device may send the first access network identifier to the UE by using a downlink physical channel. The downlink physical channel may be, for example, a physical downlink shared channel (Physical Downlink Shared Channel, PDSCH for short) or a physical downlink control channel (Physical Downlink Control Channel, PDCCH for short).

Step 104: The network device allocates a resource to the UE according to the first access network identifier.

The resource allocated by the network device to the UE according to the first access network identifier may be an uplink resource of the UE. The uplink resource may be used for the UE to transmit uplink data information or uplink signaling information.

It should be noted that, the network device may further schedule the UE according to the first access network identifier, that is, send downlink data information and/or downlink control information (Downlink Control Information, DCI for short) to the UE according to the first access network identifier, and receive uplink data information sent by the UE according to the first access network identifier, to schedule the UE.

In the random access method provided in this embodiment, the network device only needs to allocate a first access network identifier to UE according to received identification information sent by the UE according to an access status, send the first access network identifier to the UE, and allocate a resource to the UE according to the allocated first access network identifier, so that resources used for accessing the network device by the UE can be reduced, and signaling overheads can be reduced.

### Embodiment 2

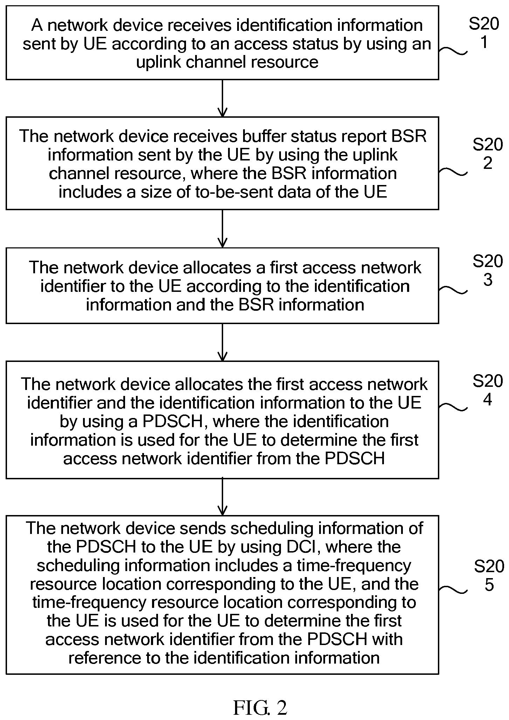

FIG. 2 is a flowchart of a random access method according to Embodiment 2 of the present invention. This embodiment further provides a random access method. As shown in FIG. 2, the method is based on the foregoing embodiment. Optionally, the foregoing step 101 in which the network device receives the identification information sent by the UE according to the access status may include:
Step 201: The network device receives the identification information sent by the UE according to the access status by using an uplink channel resource.

Specifically, the network device may receive the identification information sent by the UE by using any message such as a random access message or a resource request message and by using the uplink channel resource.

Optionally, the uplink channel resource described above may include a time-frequency resource used for random access.

Specifically, if the uplink channel resource includes the time-frequency resource used for random access, the network device may receive the identification information sent by the UE on the corresponding time-frequency resource by using the random access message.

On the basis of the embodiment solution described above, further, the method further includes:
Step 202: The network device receives buffer status report BSR information sent by the UE by using the uplink channel resource, where the BSR information includes a size of to-be-sent data of the UE.

Correspondingly, the foregoing step 102 in which the network device allocates the first access network identifier to the UE according to the identification information may include:
Step 203: The network device allocates the first access network identifier to the UE according to the identification information and the BSR information.

Specifically, the network device further receives the buffer status report (Buffer State Report, BSR for short) information sent by the UE by using the uplink channel resource, and the network device allocates the first access network identifier to the UE with reference to the foregoing identification information by using, as reference information, the size that is of the to-be-sent data of the UE and is included in the BSR information. In this embodiment solution, further, the first access network identifier determined by the network device can be more adapted to the UE, to ensure proper resource allocation.

Further, the method further includes:
receiving, by the network device, connection establishment cause information sent by the UE by using the uplink channel resource.

Specifically, the connection establishment cause information may be, for example, a trigger condition for the random access method, that is, a trigger condition for sending the identification information to the network device by the UE by using the uplink channel resource. The trigger condition may be a UE trigger or a network device trigger. If the trigger condition is the network device trigger, the network device further sends a connection establishment request message and the like to the UE before receiving the identification information sent by the UE by using the uplink channel resource, to trigger the UE to send the identification information.

It should be noted that the identification information, the BSR information, and the connection establishment cause information are all sent by using the uplink channel resource. That is, step 201, step 202, and a step of sending the establishment cause information may be performed synchronously. If the uplink channel resource includes the time-frequency resource used for random access, that is, the network device may receive the identification information sent by the UE on the corresponding time-frequency resource by using the random access message, the random access message further includes at least the BSR information and the connection establishment cause information.

Optionally, the first access network identifier described in the foregoing solution includes a cell radio network temporary identifier (Cell Radio Network Temporary Identifier, C-RNTI for short).

Further, in the foregoing solution, step 103 in which the network device sends the first access network identifier to the UE includes:
Step 204: The network device allocates the first access network identifier and the identification information to the UE by using a PDSCH, where the identification information is used for the UE to determine the first access network identifier from the PDSCH.

On the basis of the foregoing embodiment, further, the method further includes:
Step 205: The network device sends scheduling information of the PDSCH to the UE by using DCI, where the scheduling information includes a time-frequency resource location corresponding to the UE, and the time-frequency resource location corresponding to the UE is used for the UE to determine the first access network identifier from the PDSCH with reference to the identification information.

Specifically, the time-frequency resource location corresponding to the UE that is included in the scheduling information refers to a time-frequency resource location that is in the PDSCH and that is for sending information corresponding to the UE, for example, the first access network identifier and the identification information. The network device further sends the scheduling information to the UE, so that the UE determines the information corresponding to the UE from the PDSCH according to the scheduling information, and then determines the first access network identifier according to the identification information. In this embodiment solution, the network device further sends the identification information and the scheduling information to the UE, so that uniqueness of the access network identifier that is allocated by the network device and received by the UE is ensured, thereby avoiding a conflict and collision problem of access network identifiers of different UE.

It should be noted that in this embodiment solution, there is no absolute time sequence between step 204 and step 205, and step 205 and step 204 may be performed simultaneously, or step 205 may be performed before or after step 204. This is not limited herein in the present invention.

In the solution described in any one of the foregoing embodiments, if no access network identifier or core network identifier is allocated to the UE, or an identifier already allocated to the UE is invalid, the identification information includes a string of random numbers selected by the UE.

Specifically, if no access network identifier or core network identifier is allocated to the UE, the UE may be in a scenario of initially accessing a network. If the identifier already allocated to the UE is invalid, the UE may be in a scenario of performing a cell handover or reselecting a base station. The string of random numbers selected by the UE may be a character string that includes random numbers of a preset bit quantity, for example, a character string that includes random numbers of 40 bits.

Alternatively, in the foregoing solution, if the UE is in an idle state, and a core network identifier has already been allocated to the UE, the identification information includes the core network identifier of the UE.

Specifically, if the UE is in the idle state, a connection between the UE and an access network may be interrupted, and the UE needs to access the access network again. However, because the UE has registered with a core network, the core network identifier has already been allocated to the UE.

Optionally, the foregoing core network identifier of the UE may include a temporary mobile subscriber identity (Temporary Mobile Subscriber Identity, TMSI for short) allocated by a core network device such as a mobility management entity (Mobility Management Entity, MME for short) to the UE.

In the random access method provided in this embodiment, the identification information and a time-frequency resource location corresponding to the UE are further sent to the UE when the first access network identifier is being sent to the UE, so that a conflict and collision problem of access network identifiers received by different UE can be avoided. In addition, the identification information corresponding to two access statuses of the UE is further described by using examples to ensure applicability of the solution to different scenarios.

### Embodiment 3

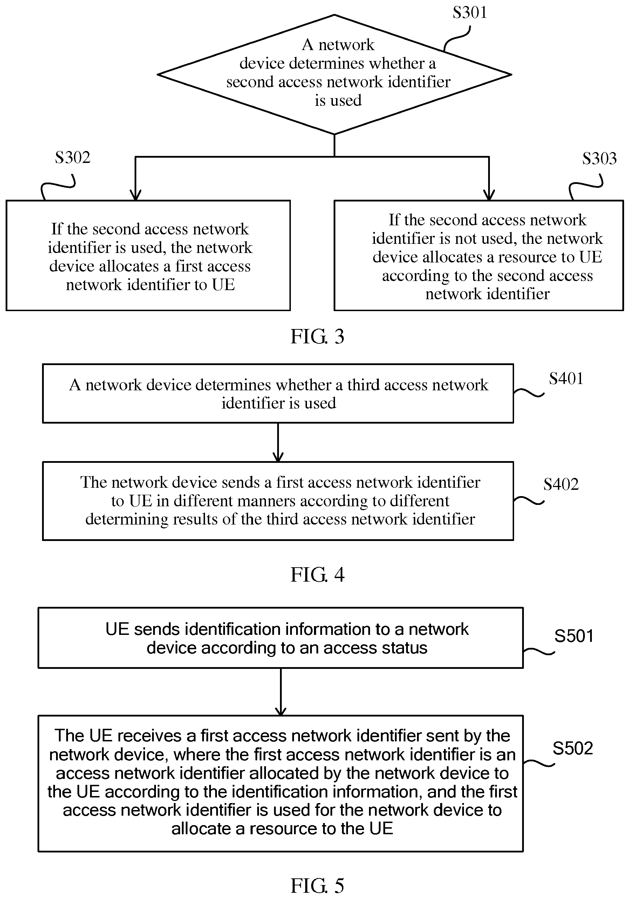

This embodiment of the present invention further provides a random access method. FIG. 3 is a flowchart of the random access method according to Embodiment 3 of the present invention.

The method is based on Embodiment 1 or Embodiment 2. Alternatively, if a second access network identifier has already been allocated to the UE, the identification information includes the second access network identifier. The second access network identifier is a C-RNTI.

Specifically, if the second access network identifier has already been allocated to the UE, that is, the UE is in a connected state, that is, if the UE has accessed a network but there is no uplink channel resource, the UE needs to access the network again to apply for a resource.

As shown in FIG. 3, before the foregoing step 102 in which the network device allocates the first access network identifier to the UE according to the identification information, the method further includes:

Step 301: The network device determines whether the second access network identifier is used.

Specifically, that the network device determines whether the second access network identifier is used may be, for example, performing retrieval in a resource allocation list stored on the network device side, to determine whether the second access network identifier is used. If the network device can retrieve the second access network identifier from the resource allocation list, it indicates that the network device has allocated a resource for the second access network identifier, that is, the second access network identifier is used by other UE. If the network device cannot retrieve the second access network identifier from the resource allocation list, it indicates that the network device has not allocated a resource for the second access network identifier, and therefore, it may be determined that the second access network identifier is not used.

Correspondingly, the foregoing step 102 in which the network device allocates the first access network identifier to the UE according to the identification information may include:
Step 302: If the second access network identifier is used, the network device allocates the first access network identifier to the UE.

Further, in the foregoing embodiment solution, step 103 in which the network device sends the first access network identifier to the UE may include:
scheduling, by the network device, a downlink channel resource by using a random access radio network temporary identifier (Random Access Radio Network Temporary Identifier, RA-RNTI for short) corresponding to a time-frequency location of the uplink channel resource, and sending the first access network identifier and the second access network identifier to the UE by using the downlink channel resource.

Alternatively, in the foregoing solution, step 103 in which the network device sends the first access network identifier to the UE may include:
scheduling, by the network device, a downlink channel resource by using the second access network identifier, and sending the first access network identifier to the UE by using the downlink channel resource.

Optionally, the method further includes:
Step 303: If the second access network identifier is not used, the network device allocates a resource to the UE according to the second access network identifier.

That is, if the second access network identifier is not used, that is, the second access network identifier is valid, the network device does not need to reallocate an access network identifier to the UE, and only needs to allocate a resource to the UE and schedule the UE directly according to the second access network identifier.

This embodiment further provides a random access method. An allocated second access network identifier of the UE is determined, and then, if the second access network identifier is used, an access network identifier is reallocated to the UE, or if the second access network identifier is not used, the UE is scheduled directly according to the second access network identifier. Multiple implementation solutions used in multiple application scenarios are provided to ensure applicability of the random access method to different scenarios.

### Embodiment 4

This embodiment of the present invention further provides a random access method. FIG. 4 is a flowchart of the random access method according to Embodiment 4 of the present invention.

The method is based on Embodiment 1 or Embodiment 2. Alternatively, if a cell handover is performed on the UE, and a third access network identifier has already been allocated to the UE, the identification information includes the third access network identifier. The third access network identifier includes an identifier allocated to the UE by a network device in another cell except a cell in which the network device is located.

As shown in FIG. 4, before the foregoing step 102 in which the network device allocates the first access network identifier to the UE according to the identification information, the method further includes:
Step 401: The network device determines whether the third access network identifier is used.

Correspondingly, in the foregoing embodiment solution, step 103 in which the network device sends the first access network identifier to the UE includes:
Step 402: The network device sends the first access network identifier to the UE in different manners according to different determining results of the third access network identifier.

Specifically, if a cell handover is performed on the UE, regardless of whether the third access network identifier is used, the network device needs to reallocate the first access network identifier to the UE. A difference lies only in that manners of sending, by the network device, the first access network identifier to the UE are different.

Further, in the embodiment solution described above, step 402 in which the network device sends the first access network identifier to the UE in the different manners according to the different determining results of the third access network identifier may include:
if the third access network identifier is used, scheduling, by the network device, a downlink channel resource by using an RA-RNTI corresponding to a time-frequency location of the uplink channel resource, and sending the first access network identifier to the UE by using the downlink channel resource.

Optionally, in the foregoing embodiment solution, step 402 in which the network device sends the first access network identifier to the UE in the different manners according to the different determining results of the third access network identifier specifically includes:
if the third access network identifier is not used, scheduling, by the network device, a downlink channel resource by using the third access network identifier, and sending the first access network identifier to the UE by using the downlink channel resource.

In the random access method provided in this embodiment, an allocated third access network identifier possessed by UE on which a cell handover is performed is determined, and then, a first access network identifier that is allocated by a network device to the UE is sent to the UE in different manners according to different determining results. Multiple implementation solutions are further provided to better ensure applicability of the random access method to different scenarios.

### Embodiment 5

Embodiment 5 provides a random access method. The method may be executed by UE. FIG. 5 is a flowchart of the random access method according to Embodiment 5 of the present invention. As shown in FIG. 5, the method may specifically include the following steps.

Step 501: The UE sends identification information to a network device according to an access status.

Step 502: The UE receives a first access network identifier sent by the network device, where the first access network identifier is an access network identifier allocated by the network device to the UE according to the identification information, and the first access network identifier is used for the network device to allocate a resource to the UE.

Optionally, the foregoing step 501 in which the UE sends the identification information to the network device according to the access status may include:
sending, by the UE, the identification information to the network device according to the access status by using an uplink channel resource.

Further, in the foregoing solution, the uplink channel resource includes a time-frequency resource used for random access.

Further, the method may further include:
sending, by the UE, BSR information to the network device by using the uplink channel resource, where the BSR information is used for the network device to allocate the first access network identifier to the UE with reference to the identification information.

The BSR information includes a size of to-be-sent data of the UE.

Optionally, the method may further include:
sending, by the UE, connection establishment cause information to the network device by using the uplink channel resource.

Optionally, the first access network identifier includes a C-RNTI.

Alternatively, in the foregoing solution, step 502 in which the UE receives the first access network identifier sent by the network device may include:
receiving, by the UE, the first access network identifier and the identification information that are sent by the network device by using the PDSCH; and
determining, by the UE, the first access network identifier from the PDSCH according to the identification information.

Further, before the determining, by the UE, the first access network identifier from the PDSCH according to the identification information, the method further includes:
receiving, by the UE, scheduling information that is of the PDSCH and is sent by the network device by using DCI, where the scheduling information includes a time-frequency resource location corresponding to the UE.

Correspondingly, the determining, by the UE, the first access network identifier from the PDSCH according to the identification information includes:
determining, by the UE, the first access network identifier from the PDSCH according to the identification information and the time-frequency resource location corresponding to the UE.

Optionally, if no access network identifier or core network identifier is allocated to the UE, or an identifier already allocated to the UE is invalid, the identification information includes a string of random numbers selected by the UE.

Alternatively, if the UE is in an idle state, and a core network identifier has already been allocated to the UE, the identification information may include the core network identifier of the UE.

Optionally, the core network identifier of the UE may include a temporary mobile subscriber identity allocated by an MME to the UE.

Alternatively, if a second access network identifier has already been allocated to the UE, and the second access network identifier is not used, the identification information includes the second access network identifier. The second access network identifier is a C-RNTI.

Further, on the basis of the foregoing solution, step 502 in which the UE receives the first access network identifier sent by the network device may include:
receiving, by the UE, the first access network identifier and the second access network identifier that are sent by the network device by using a downlink channel resource scheduled by using an RA-RNTI corresponding to a time-frequency location of the uplink channel resource.

Alternatively, step 502 in which the UE receives the first access network identifier sent by the network device may include:
receiving, by the UE, the first access network identifier sent by the network device by using a downlink channel resource scheduled by using the second access network identifier.

Optionally, if a cell handover is performed on the UE, and a third access network identifier has already been allocated to the UE, the identification information includes the third access network identifier. The third access network identifier includes an identifier allocated to the UE by a network device in another cell except a cell in which the network device is located.

Correspondingly, step 502 in which the UE receives the first access network identifier sent by the network device may include:
receiving, by the UE, the first access network identifier sent by the network device in different manners according to different determining results of the third access network identifier.

Optionally, in the foregoing solution, the receiving, by the UE, the first access network identifier sent by the network device in different manners according to different determining results of the third access network identifier may include:
receiving, by the UE, the first access network identifier sent, when the third access network identifier is used, by the network device by using a downlink channel resource scheduled by using an RA-RNTI corresponding to a time-frequency location of the uplink channel resource.

Alternatively, the receiving, by the UE, the first access network identifier sent by the network device in different manners according to different determining results of the third access network identifier may include:
receiving, by the UE, the first access network identifier sent, when the third access network identifier is not used, by the network device by using a downlink channel resource scheduled by using the third access network identifier.

The random access method provided in this embodiment of the present invention is a UE-side method corresponding to any one of the random access method in Embodiment 1 to Embodiment 4. UE sends identification information to a network device according to an access status, and receives a first access network identifier sent by the network device according to the identification information, so that the network device can allocate a resource to the UE directly according to the first access network identifier, and the UE does not need to perform a preamble sequence solution to access the network device. Therefore, resources used for accessing the network device by the UE are reduced, and signaling overheads are reduced.

In addition, in this embodiment of the present invention, the UE may further precisely determine, according to the received identification information and a received time-frequency resource location corresponding to the UE that are sent by the network device, the first access network identifier corresponding to the UE from a PDSCH sent by the network device, so that a problem of a conflict and a collision with access network identifiers received by other UE can be avoided. In addition, the identification information corresponding to multiple access statuses of the UE is further described by using examples to ensure applicability of the solution to different scenarios.

### Embodiment 6

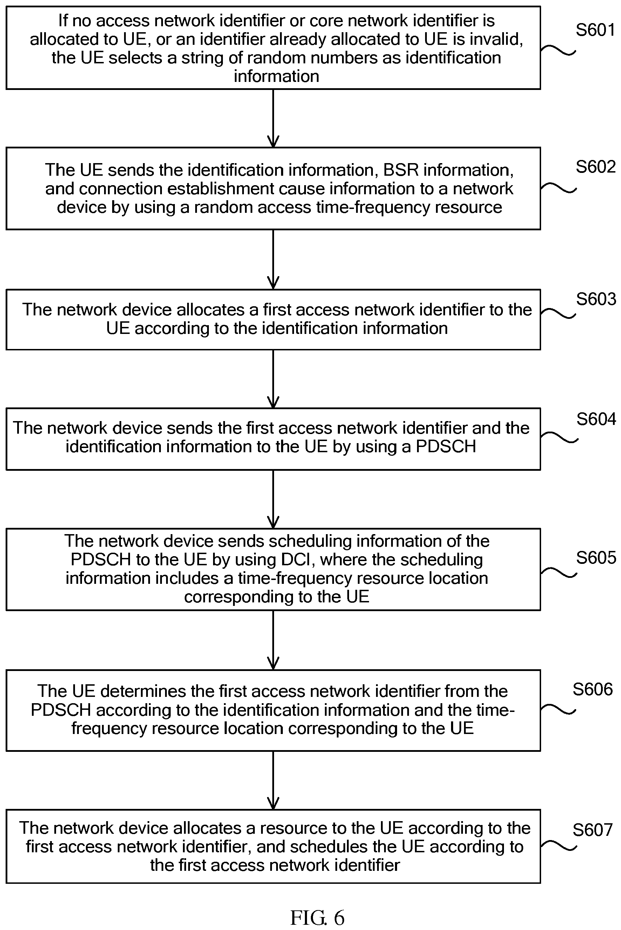

Embodiment 6 of the present invention further provides a random access method. This embodiment provides explanations and descriptions of the foregoing embodiment solution by using a specific instance. FIG. 6 is a flowchart of the random access method according to Embodiment 6 of the present invention. As shown in FIG. 6, the method includes the following steps.

Step 601: If no access network identifier or core network identifier is allocated to UE, or an identifier already allocated to UE is invalid, the UE selects a string of random numbers as identification information.

Step 602: The UE sends the identification information, BSR information, and connection establishment cause information to a network device by using a random access time-frequency resource.

Step 603: The network device allocates a first access network identifier to the UE according to the identification information.

The first access network identifier is a C-RNTI.

Step 604: The network device sends the first access network identifier and the identification information to the UE by using a PDSCH.

Step 605: The network device sends scheduling information of the PDSCH to the UE by using DCI, where the scheduling information includes a time-frequency resource location corresponding to the UE.

It should be noted that there is no absolute time sequence between step 604 and step 605, and step 604 and step 605 may be performed in sequence or may be performed simultaneously. This is not limited herein.

Step 606: The UE determines the first access network identifier from the PDSCH according to the identification information and the time-frequency resource location corresponding to the UE.

Alternatively, if the UE is in an idle state, and a core network identifier has already been allocated to the UE, only step 601 needs to be adaptively adjusted, and other steps are similar to those in the foregoing solution. The adjusted step may be:

If the UE is in an idle state, and a core network identifier has already been allocated to the UE, the UE uses the core network identifier as the identification information.

Optionally, the core network identifier includes a temporary mobile subscriber identity allocated by an MME to the UE.

Step 607: The network device allocates a resource to the UE according to the first access network identifier, and schedules the UE according to the first access network identifier.

In this embodiment of the present invention, a random access method for accessing a network device by UE is provided, where no access network identifier or core network identifier is allocated to the UE, or an identifier already allocated to the UE is invalid, so that resources used for accessing the network device by the UE can be reduced, where no access network identifier or core network identifier is allocated to the UE, or the identifier already allocated to the UE is invalid.

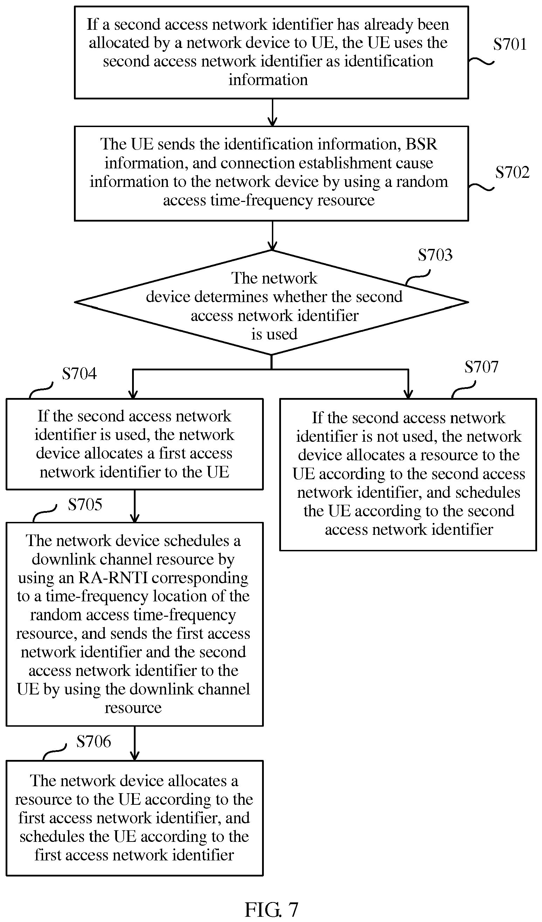

Embodiment 6 further provides a random access method. FIG. 7 is a flowchart of the another random access method according to Embodiment 6 of the present invention. As shown in FIG. 7, the method includes the following steps.

Step 701: If a second access network identifier has already been allocated by a network device to UE, the UE uses the second access network identifier as identification information.

The second access network identifier may be a C-RNTI allocated by the network device before the random access method.

Step 702: The UE sends the identification information, BSR information, and connection establishment cause information to the network device by using a random access time-frequency resource.

Step 703: The network device determines whether the second access network identifier is used.

If the second access network identifier is used, step 704 to step 706 are performed; or if the second access network identifier is not used, step 707 is performed.

Step 704: If the second access network identifier is used, the network device allocates a first access network identifier to the UE.

Step 705: The network device schedules a downlink channel resource by using an RA-RNTI corresponding to a time-frequency location of the random access time-frequency resource, and sends the first access network identifier and the second access network identifier to the UE by using the downlink channel resource.

Alternatively, step 705 in which the network device sends the first access network identifier to the UE may be that the network device schedules a downlink channel resource by using the second access network identifier, and sends the first access network identifier to the UE by using the downlink channel resource.

Step 706: The network device allocates a resource to the UE according to the first access network identifier, and schedules the UE according to the first access network identifier.

Step 707: If the second access network identifier is not used, the network device allocates a resource to the UE according to the second access network identifier, and schedules the UE according to the second access network identifier.

In this embodiment of the present invention, a random access method for accessing a network device by UE to which an access network identifier has already been allocated by the network device may be further provided, so that resources used for accessing the network device by the UE to which the access network identifier has already been allocated by the network device can be reduced.

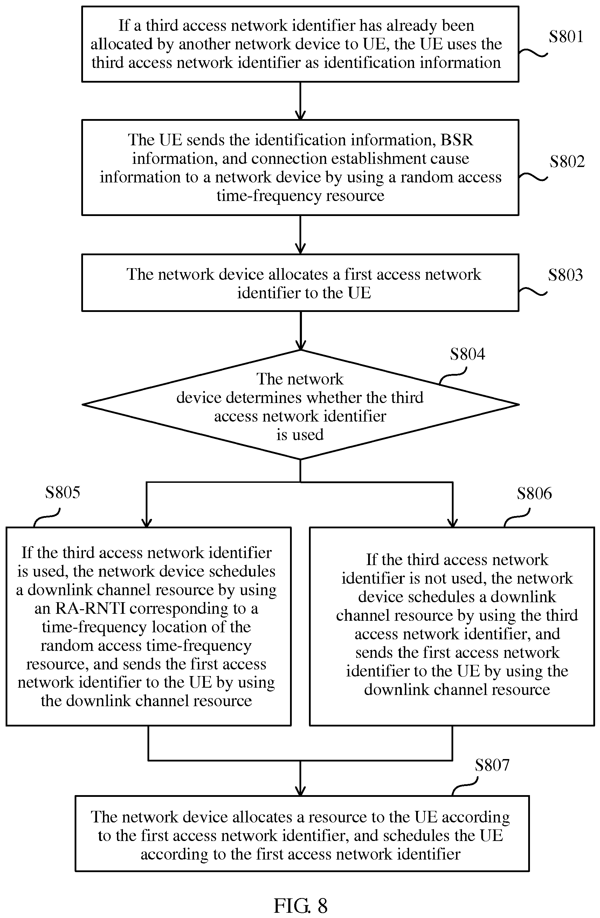

Embodiment 6 further provides a random access method. FIG. 8 is a flowchart of the still another random access method according to Embodiment 6 of the present invention. As shown in FIG. 8, the method may include the following steps.

Step 801: If a third access network identifier has already been allocated by another network device to UE, the UE uses the third access network identifier as identification information.

The third access network identifier may be a C-RNTI allocated before the random access method by the another network device, that is, a network device before a cell handover is performed on the UE.

Step 802: The UE sends the identification information, BSR information, and connection establishment cause information to a network device by using a random access time-frequency resource.

Step 803: The network device allocates the first access network identifier to the UE.

Step 804: The network device determines whether the third access network identifier is used.

If the third access network identifier is used, step 805 to step 807 are performed; or if the third access network identifier is not used, step 806 and step 807 are performed.

It should be noted that the foregoing step 803 and step 804 may be performed simultaneously or may be performed in sequence. This is not limited herein.

Step 805: If the third access network identifier is used, the network device schedules a downlink channel resource by using an RA-RNTI corresponding to a time-frequency location of the random access time-frequency resource, and sends the first access network identifier to the UE by using the downlink channel resource.

Step 806: If the third access network identifier is not used, the network device schedules a downlink channel resource by using the third access network identifier, and sends the first access network identifier to the UE by using the downlink channel resource.

Step 807: The network device allocates a resource to the UE according to the first access network identifier, and schedules the UE according to the first access network identifier.

In this embodiment of the present invention, a random access method for accessing a network device by UE to which an access network identifier has already been allocated by another network device may be further provided, so that resources used for accessing a network device by the UE to which the access network identifier has already been allocated by the another network device can be reduced.

In this embodiment of the present invention, an instance of accessing a network device by UE in multiple different access statuses is used to provide explanations and descriptions of the foregoing embodiment solution. Resources used for accessing the network device by the UE in the multiple different access statuses can be reduced, and signaling overheads can be reduced.

### Embodiment 7

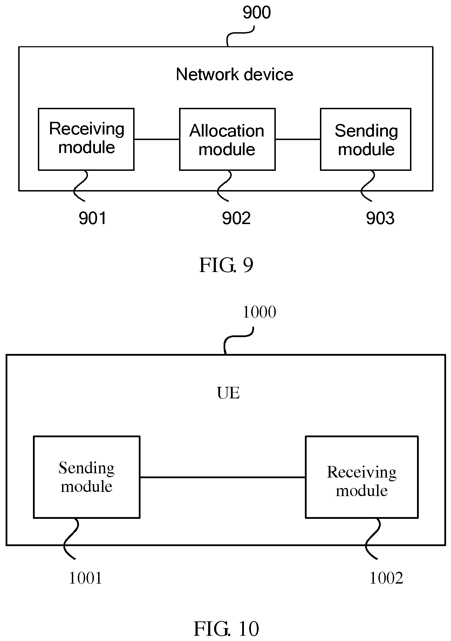

Embodiment 7 of the present invention further provides a network device. The network device provided in Embodiment 7 of the present invention may execute any one of the random access methods provided in Embodiment 1 to Embodiment 4. FIG. 9 is a schematic structural diagram of the network device according to Embodiment 7 of the present invention.

As shown in FIG. 9, a network device 900 includes a receiving module 901, an allocation module 902, and a sending module 903. The receiving module 901, the allocation module 902, and the sending module 903 are successively connected.

The receiving module 901 is configured to: receive identification information sent by UE according to an access status, and send the identification information to the allocation module 902.

The allocation module 902 is configured to: allocate a first access network identifier to the UE according to the identification information, and send the first access network identifier to the sending module 903.

The sending module 903 is configured to send the first access network identifier to the UE.

The allocation module 902 is further configured to allocate a resource to the UE according to the first access network identifier.

Optionally, the receiving module 901 is further configured to receive the identification information sent by the UE according to the access status by using an uplink channel resource.

Further, the uplink channel resource includes a time-frequency resource used for random access.

Further, the receiving module 901 is further configured to: receive BSR information sent by the UE by using the uplink channel resource, and send the BSR information to the allocation module 902. The BSR information includes a size of to-be-sent data of the UE.

Correspondingly, the allocation module 902 is further configured to allocate the first access network identifier to the UE according to the identification information and the BSR information.

On the basis of any one of the foregoing network devices, the receiving module 901 is further configured to receive connection establishment cause information sent by the UE by using the uplink channel resource.

Optionally, the foregoing first access network identifier includes a C-RNTI.

In the foregoing network device, the sending module 903 is further configured to send the first access network identifier and the identification information to the UE by using a PDSCH. The identification information is used for the UE to determine the first access network identifier from the PDSCH.

Further, the sending module 903 is further configured to send scheduling information of the PDSCH to the UE by using DCI. The scheduling information includes a time-frequency resource location corresponding to the UE, and the time-frequency resource location corresponding to the UE is used for the UE to determine the first access network identifier from the PDSCH with reference to the identification information.

On the basis of any one of the foregoing network devices, further, if no access network identifier or core network identifier is allocated to the UE, or an identifier already allocated to the UE is invalid, the identification information received by the receiving module 901 includes a string of random numbers selected by the UE.

Alternatively, if the UE is in an idle state, and a core network identifier has already been allocated to the UE, the identification information received by the receiving module 901 includes the core network identifier of the UE.

Optionally, the foregoing core network identifier of the UE includes a temporary mobile subscriber identity allocated by an MME to the UE.

Alternatively, if a second access network identifier has already been allocated to the UE, the identification information received by the receiving module 901 includes the second access network identifier. The second access network identifier is a C-RNTI.

The network device 900 further includes a first determining module, and the first determining module is connected to the receiving module 901 and the allocation module 902.

The first determining module is configured to: before the allocation module 902 allocates the first access network identifier to the UE according to the identification information, determine whether the second access network identifier is used, and send a determining result of the second access network identifier to the allocation module 902.

Correspondingly, the allocation module 902 is further configured to: if the second access network identifier is used, allocate the first access network identifier to the UE.

Further, the network device 900 further includes a first scheduling module, and the first scheduling module is connected to the allocation module 902 and the sending module 903.

The first scheduling module is configured to schedule a downlink channel resource by using an RA-RNTI corresponding to a time-frequency location of the uplink channel resource.

The sending module 903 is further configured to send the first access network identifier and the second access network identifier to the UE by using the downlink channel resource.

Alternatively, the network device 900 further includes a second scheduling module, and the second scheduling module is connected to the allocation module 902 and the sending module 903.

The second scheduling module is configured to schedule a downlink channel resource by using the second access network identifier.

The sending module 903 is further configured to send the first access network identifier to the UE by using the downlink channel resource.

Optionally, the allocation module 902 is further configured to: if the second access network identifier is not used, allocate a resource to the UE according to the second access network identifier.

Alternatively, if a cell handover is performed on the UE, and a third access network identifier has already been allocated to the UE, the identification information received by the receiving module 901 includes the third access network identifier. The third access network identifier includes an identifier allocated to the UE by a network device in another cell except a cell in which the network device is located.

The network device 900 further includes a second determining module, and the second determining module is connected to the receiving module 901 and the allocation module 902.

The second determining module is configured to: before the allocation module 902 allocates the first access network identifier to the UE according to the identification information, determine whether the third access network identifier is used, and send a determining result of the third access network identifier to the allocation module 902.

Correspondingly, the sending module 903 is further configured to send the first access network identifier to the UE in different manners according to different determining results of the third access network identifier.

Optionally, the network device 900 further includes a third scheduling module, and the third scheduling module is connected to the allocation module 902 and the sending module 903.

The third scheduling module is configured to: if the third access network identifier is used, schedule a downlink channel resource by using an RA-RNTI corresponding to a time-frequency location of the uplink channel resource.

The sending module 903 is further configured to send the first access network identifier to the UE by using the downlink channel resource.

Alternatively, the network device 900 further includes a fourth scheduling module, and the fourth scheduling module is connected to the allocation module 902 and the sending module 903.

The fourth scheduling module is configured to: if the third access network identifier is not used, schedule a downlink channel resource by using the third access network identifier.

The sending module 903 is further configured to send the first access network identifier to the UE by using the downlink channel resource.

The network device provided in this embodiment of the present invention may execute any one of the random access methods in Embodiment 1 to Embodiment 4. The network device only needs to allocate a first access network identifier to UE according to received identification information sent by the UE according to an access status, send the first access network identifier to the UE, and allocate a resource to the UE according to the allocated first access network identifier, so that resources used for accessing the network device by the UE can be reduced, and signaling overheads can be reduced.

### Embodiment 8

Embodiment 8 of the present invention further provides UE. The UE provided in Embodiment 8 of the present invention may execute the random access method provided in Embodiment 5. FIG. 10 is a schematic structural diagram of the UE according to Embodiment 8 of the present invention.

As shown in FIG. 10, the UE 1000 includes a sending module 1001 and a receiving module 1002. The sending module 1001 and the receiving module 1002 are connected. Both the sending module 1001 and the receiving module 1002 are connected to a network device.

The sending module 1001 is configured to send identification information to the network device according to an access status.

The receiving module 1002 is configured to receive a first access network identifier sent by the network device. The first access network identifier is an access network identifier allocated by the network device to the UE according to the identification information, and the first access network identifier is used for the network device to allocate a resource to the UE.

Further, the sending module 1001 is further configured to send the identification information to the network device according to the access status by using an uplink channel resource.

Optionally, the uplink channel resource includes a time-frequency resource used for random access.

Optionally, the sending module 1001 is further configured to send BSR information to the network device by using the uplink channel resource. The BSR information is used for the network device to allocate the first access network identifier to the UE with reference to the identification information. The BSR information includes a size of to-be-sent data of the UE.

Further, the sending module 1001 is further configured to send connection establishment cause information to the network device by using the uplink channel resource.

Optionally, the first access network identifier received by the foregoing receiving module 1002 includes a C-RNTI.

In the UE described above, the UE 1000 further includes a determining module, and the determining module and the receiving module 1002 are connected.

The receiving module 1002 is further configured to: receive the first access network identifier and the identification information that are sent by the network device by using the PDSCH, and send the PDSCH and the identification information to the determining module.

The determining module is configured to determine the first access network identifier from the PDSCH according to the identification information.

Optionally, the receiving module 1002 is further configured to: before the determining module determines the first access network identifier from the PDSCH, receive scheduling information that is of the PDSCH and is sent by the network device by using DCI, and send the scheduling information to the determining module. The scheduling information includes a time-frequency resource location corresponding to the UE.

The determining module is further configured to determine the first access network identifier from the PDSCH according to the identification information and the time-frequency resource location corresponding to the UE.

Further, if no access network identifier or core network identifier is allocated to the UE, or an identifier already allocated to the UE is invalid, the identification information includes a string of random numbers selected by the UE.

Alternatively, if the UE is in an idle state, and a core network identifier has already been allocated to the UE, the identification information includes the core network identifier of the UE.

Optionally, the core network identifier of the UE includes a temporary mobile subscriber identity allocated by an MME to the UE.

Alternatively, if a second access network identifier has already been allocated to the UE, and the second access network identifier is not used, the identification information includes the second access network identifier. The second access network identifier is a C-RNTI.

Further, the receiving module 1002 is further configured to receive the first access network identifier and the second access network identifier that are sent by the network device by using a downlink channel resource scheduled by using an RA-RNTI corresponding to a time-frequency location of the uplink channel resource.

Alternatively, the receiving module 1002 is further configured to receive the first access network identifier sent by the network device by using a downlink channel resource scheduled by using the second access network identifier.

Alternatively, if a cell handover is performed on the UE, and a third access network identifier has already been allocated to the UE, the identification information includes the third access network identifier. The third access network identifier includes an identifier allocated to the UE by a network device in another cell except a cell in which the network device is located.

The receiving module 1002 is further configured to receive the first access network identifier sent by the network device in different manners according to different determining results of the third access network identifier.

Optionally, the receiving module 1002 is further configured to receive the first access network identifier sent, when the third access network identifier is used, by the network device by using a downlink channel resource scheduled by using an RA-RNTI corresponding to a time-frequency location of the uplink channel resource.

Alternatively, the receiving module 1002 is further configured to receive the first access network identifier sent, when the third access network identifier is not used, by the network device by using a downlink channel resource scheduled by using the third access network identifier.

The UE provided in this embodiment of the present invention may execute the random access method, provided in Embodiment 5, executed by UE. The UE may send identification information to a network device according to an access status, and receive a first access network identifier sent by the network device according to the identification information, so that the network device can allocate a resource to the UE directly according to the first access network identifier, and the UE does not need to perform a preamble sequence solution to access the network device. Therefore, resources used for accessing the network device by the UE are reduced, and signaling overheads are reduced.

### Embodiment 9

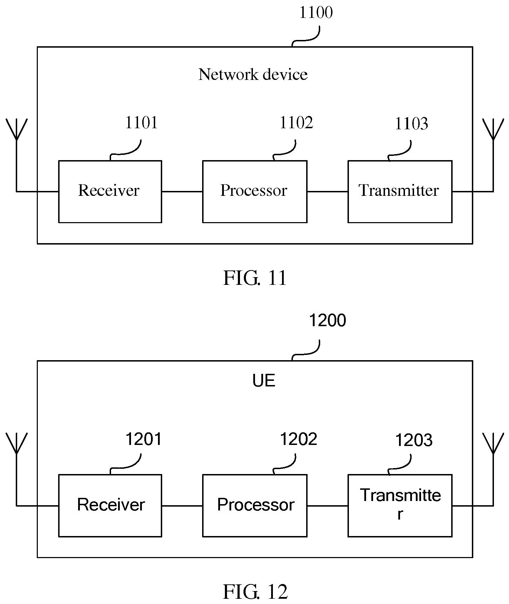

Embodiment 9 of the present invention further provides a network device. The network device provided in Embodiment 9 of the present invention may execute any one of the random access methods provided in Embodiment 1 to Embodiment 4. FIG. 11 is a schematic structural diagram of the network device according to Embodiment 9 of the present invention.

As shown in FIG. 11, the network device 1100 includes a receiver 1101, a processor 1102, and a transmitter 1103. The receiver 1101, the processor 1102, and the transmitter 1103 are successively connected.

The receiver 1101 is configured to: receive identification information sent by UE according to an access status, and send the identification information to the processor 1102.

The processor 1102 is configured to: allocate a first access network identifier to the UE according to the identification information, and send the first access network identifier to the transmitter 1103.

The transmitter 1103 is configured to send the first access network identifier to the UE.

The processor 1102 is further configured to allocate a resource to the UE according to the first access network identifier.

Further, the foregoing receiver 1101 is further configured to receive the identification information sent by the UE according to the access status by using an uplink channel resource.

Optionally, the uplink channel resource includes a time-frequency resource used for random access.

Optionally, the receiver 1101 is further configured to: receive BSR information sent by the UE by using the uplink channel resource, and send the BSR information to the processor 1102. The BSR information includes a size of to-be-sent data of the UE.

Correspondingly, the processor 1102 is further configured to allocate the first access network identifier to the UE according to the identification information and the BSR information.

Further, the receiver 1101 is further configured to receive connection establishment cause information sent by the UE by using the uplink channel resource.

Optionally, in the network device described above, the first access network identifier includes a C-RNTI.

Optionally, the transmitter 1103 is further configured to send the first access network identifier and the identification information to the UE by using a PDSCH. The identification information is used for the UE to determine the first access network identifier from the PDSCH.

Optionally, the transmitter 1103 is further configured to send scheduling information of the PDSCH to the UE by using DCI. The scheduling information includes a time-frequency resource location corresponding to the UE, and the time-frequency resource location corresponding to the UE is used for the UE to determine the first access network identifier from the PDSCH with reference to the identification information.

Further, if no access network identifier or core network identifier is allocated to the UE, or an identifier already allocated to the UE is invalid, the identification information received by the receiver 1101 includes a string of random numbers selected by the UE.

Alternatively, if the UE is in an idle state, and a core network identifier has already been allocated to the UE, the identification information received by the receiver 1101 includes the core network identifier of the UE.

Optionally, the core network identifier of the UE includes a temporary mobile subscriber identity allocated by an MME to the UE.

Alternatively, if a second access network identifier has already been allocated to the UE, the identification information received by the receiver 1101 includes the second access network identifier. The second access network identifier is a C-RNTI.

The processor 1102 is further configured to: before allocating the first access network identifier to the UE according to the identification information, determine whether the second access network identifier is used, and if the second access network identifier is used, allocate the first access network identifier to the UE.

Further, the processor 1102 is further configured to schedule a downlink channel resource by using an RA-RNTI corresponding to a time-frequency location of the uplink channel resource.

The transmitter 1103 is further configured to send the first access network identifier and the second access network identifier to the UE by using the downlink channel resource.

Alternatively, the processor 1102 is further configured to schedule a downlink channel resource by using the second access network identifier.

The transmitter 1103 is further configured to send the first access network identifier to the UE by using the downlink channel resource.

Optionally, the processor 1102 is further configured to: if the second access network identifier is not used, allocate a resource to the UE according to the second access network identifier.

Alternatively, if a cell handover is performed on the UE, and a third access network identifier has already been allocated to the UE, the identification information received by the receiver 1101 includes the third access network identifier. The third access network identifier includes an identifier allocated to the UE by a network device in another cell except a cell in which the network device is located.

The processor 1102 is further configured to: before allocating the first access network identifier to the UE according to the identification information, determine whether the third access network identifier is used.

The transmitter 1103 is further configured to send the first access network identifier to the UE in different manners according to different determining results of the third access network identifier.

Optionally, the processor 1102 is further configured to: if the third access network identifier is used, schedule a downlink channel resource by using an RA-RNTI corresponding to a time-frequency location of the uplink channel resource.

The transmitter 1103 is further configured to send the first access network identifier to the UE by using the downlink channel resource.

Alternatively, the processor 1102 is further configured to: if the third access network identifier is not used, schedule a downlink channel resource by using the third access network identifier.

The transmitter 1103 is further configured to send the first access network identifier to the UE by using the downlink channel resource.

The network device provided in this embodiment of the present invention may execute any one of the random access methods in Embodiment 1 to Embodiment 4. The network device only needs to allocate a first access network identifier to UE according to received identification information sent by the UE according to an access status, send the first access network identifier to the UE, and allocate a resource to the UE according to the allocated first access network identifier, so that resources used for accessing the network device by the UE can be reduced, and signaling overheads can be reduced.

### Embodiment 10

Embodiment 10 of the present invention further provides UE. FIG. 12 is a schematic structural diagram of the UE according to Embodiment 10 of the present invention.

As shown in FIG. 12, the UE 1200 includes a receiver 1201, a processor 1202, and a transmitter 1203. The receiver 1201, the processor 1202, and the transmitter 1203 are successively connected.

The transmitter 1203 is configured to send identification information to a network device according to an access status.

The receiver 1201 is configured to receive a first access network identifier sent by the network device. The first access network identifier is an access network identifier allocated by the network device to the UE according to the identification information, and the first access network identifier is used for the network device to allocate a resource to the UE.

Further, the transmitter 1203 is further configured to send the identification information to the network device according to the access status by using an uplink channel resource.

The uplink channel resource includes a time-frequency resource used for random access.

Optionally, the transmitter 1203 is further configured to send BSR information to the network device by using the uplink channel resource. The BSR information is used for the network device to allocate the first access network identifier to the UE with reference to the identification information. The BSR information includes a size of to-be-sent data of the UE.

Further, the transmitter 1203 is further configured to send connection establishment cause information to the network device by using the uplink channel resource.

In the embodiment solution described above, the first access network identifier received by the receiver 1201 includes a C-RNTI.

Optionally, the receiver 1201 is further configured to: receive the first access network identifier and the identification information that are sent by the network device by using the PDSCH, and send the PDSCH and the identification information to the processor 1202.

The processor 1202 is further configured to determine the first access network identifier from the PDSCH according to the identification information.

Optionally, the receiver 1201 is further configured to: before the processor 1202 determines the first access network identifier from the PDSCH according to the identification information, receive scheduling information that is of the PDSCH and is sent by the network device by using DCI, and send the scheduling information to the processor 1202. The scheduling information includes a time-frequency resource location corresponding to the UE.

The processor 1202 is further configured to determine the first access network identifier from the PDSCH according to the identification information and the time-frequency resource location corresponding to the UE.

Further, if no access network identifier or core network identifier is allocated to the UE, or an identifier already allocated to the UE is invalid, the identification information includes a string of random numbers selected by the UE.

Alternatively, if the UE is in an idle state, and a core network identifier has already been allocated to the UE, the identification information includes the core network identifier of the UE.

Optionally, the core network identifier of the UE includes a temporary mobile subscriber identity allocated by an MME to the UE.

Alternatively, if a second access network identifier has already been allocated to the UE, and the second access network identifier is not used, the identification information includes the second access network identifier. The second access network identifier is a C-RNTI.

Optionally, the receiver 1201 is further configured to receive the first access network identifier and the second access network identifier that are sent by the network device by using a downlink channel resource scheduled by using an RA-RNTI corresponding to a time-frequency location of the uplink channel resource.

Alternatively, the receiver 1201 is further configured to receive the first access network identifier sent by the network device by using a downlink channel resource scheduled by using the second access network identifier.

Alternatively, if a cell handover is performed on the UE, and a third access network identifier has already been allocated to the UE, the identification information includes the third access network identifier. The third access network identifier includes an identifier allocated to the UE by a network device in another cell except a cell in which the network device is located.

The receiver 1201 is further configured to receive the first access network identifier sent by the network device in different manners according to different determining results of the third access network identifier.

Optionally, the receiver 1201 is further configured to receive the first access network identifier sent, when the third access network identifier is used, by the network device by using a downlink channel resource scheduled by using an RA-RNTI corresponding to a time-frequency location of the uplink channel resource.

Alternatively, the receiver 1201 is further configured to receive the first access network identifier sent, when the third access network identifier is not used, by the network device by using a downlink channel resource scheduled by using the third access network identifier.

The UE provided in this embodiment of the present invention may execute the random access method, provided in Embodiment 5, executed by UE. The UE may send identification information to a network device according to an access status, and receive a first access network identifier sent by the network device according to the identification information, so that the network device can allocate a resource to the UE directly according to the first access network identifier, and the UE does not need to perform a preamble sequence solution to access the network device. Therefore, resources used for accessing the network device by the UE are reduced, and signaling overheads are reduced.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the appended claims.

## Claims

1. A random access method, comprising:
receiving (S101), by a network device, identification information, which is different from a connection establishment cause information and which is sent by a user equipment, UE, according to an access status of the UE, the access status being one of different access statuses in different application scenarios, the application scenarios comprising scenarios in which the UE initially accesses a network, a connection is interrupted and the UE accesses the network again, the UE has accessed the network but there is no uplink channel resource and the UE accesses the network again to apply for a resource, or a cell handover is performed or a base station is reselected;
allocating (S102), by the network device, a first access network identifier to the UE according to the identification information;
sending (S103), by the network device, the first access network identifier to the UE; and
allocating (S104), by the network device, a resource to the UE according to the first access network identifier.

2. The method according to claim 1, wherein the receiving (S101), by the network device, the identification information, which is sent by the user equipment, UE, according to the access status, comprises:
receiving (S201), by the network device, the identification information sent by the UE according to the access status by using an uplink channel resource.

3. The method according to claim 2, wherein the uplink channel resource comprises a time-frequency resource used for random access.

4. The method according to claim 2 or 3, wherein the method further comprises:
receiving (S202), by the network device, buffer status report, BSR, information sent by the UE by using the uplink channel resource, wherein the BSR information comprises a size of to-be-sent data of the UE; and
the allocating, by the network device, the first access network identifier to the UE according to the identification information comprises:
allocating (S203), by the network device, the first access network identifier to the UE according to the identification information and the BSR information.

5. A random access method, comprising:
sending (S501), by a user equipment, UE, identification information, which is different from a connection establishment cause information, to a network device according to an access status of the UE, the access status being one of different access statuses in different application scenarios, the application scenarios comprising scenarios in which the UE initially accesses a network, a connection is interrupted and the UE accesses the network again, the UE has accessed the network but there is no uplink channel resource and the UE accesses the network again to apply for a resource, or a cell handover is performed or a base station is reselected; and
receiving (S502), by the UE, a first access network identifier sent by the network device, wherein the first access network identifier is an access network identifier allocated by the network device to the UE according to the identification information, and the first access network identifier is used by the network device for allocation of a resource to the UE.

6. The method according to claim 5, wherein the sending (S501), by the UE, the identification information to the network device according to the access status comprises:
sending, by the UE, the identification information to the network device according to the access status by using an uplink channel resource.

7. The method according to claim 6, wherein the uplink channel resource comprises a time-frequency resource used for random access.

8. The method according to claim 6 or 7, wherein the method further comprises:
sending, by the UE, buffer status report, BSR, information to the network device by using the uplink channel resource, wherein the BSR information is used by the network device for allocation of the first access network identifier to the UE with reference to the identification information, and the BSR information comprises a size of to-be-sent data of the UE.

9. A network device, comprising a receiving module (901), an allocation module (902), and a sending module (903), wherein the receiving module (901), the allocation module (902), and the sending module (903) are successively connected;
the receiving module (901) is configured to: receive identification information, which is different from a connection establishment cause information and which is sent by a user equipment, UE, according to an access status of the UE, the access status being one of different access statuses in different application scenarios, the application scenarios comprising scenarios in which the UE initially accesses a network, a connection is interrupted and the UE accesses the network again, the UE has accessed the network but there is no uplink channel resource and the UE accesses the network again to apply for a resource, or a cell handover is performed or a base station is reselected, and send the identification information to the allocation module (902);
the allocation module (902) is configured to: allocate a first access network identifier to the UE according to the identification information, and send the first access network identifier to the sending module (903);
the sending module (903) is configured to send the first access network identifier to the UE; and
the allocation module (902) is further configured to allocate a resource to the UE according to the first access network identifier.

10. The network device according to claim 9, wherein:
the receiving module (901) is further configured to receive the identification information sent by the UE according to the access status by using an uplink channel resource.

11. The network device according to claim 10, wherein the uplink channel resource comprises a time-frequency resource used for random access.

12. The network device according to claim 10 or 11, wherein:
the receiving module (901) is further configured to: receive buffer status report, BSR, information sent by the UE by using the uplink channel resource, and send the BSR information to the allocation module (902), wherein the BSR information comprises a size of to-be-sent data of the UE; and
the allocation module (902) is further configured to allocate the first access network identifier to the UE according to the identification information and the BSR information.

13. User equipment, UE, comprising a sending module (1001) and a receiving module (1002), wherein the sending module (1001 and the receiving module (1002) are connected;
the sending module (1001) is configured to send identification information, which is different from a connection establishment cause information, to a network device according to an access status of the UE, the access status being one of different access statuses in different application scenarios, the application scenarios comprising scenarios in which the UE initially accesses a network, a connection is interrupted and the UE accesses the network again, the UE has accessed the network but there is no uplink channel resource and the UE accesses the network again to apply for a resource, or a cell handover is performed or a base station is reselected; and
the receiving module (1002) is configured to receive a first access network identifier sent by the network device, wherein the first access network identifier is an access network identifier allocated by the network device to the UE according to the identification information, where a resource is allocated to the UE by the network device by use of the first access network identifier.

14. The UE according to claim 13, wherein:
the sending module (1001) is further configured to send the identification information to the network device according to the access status by using an uplink channel resource.

15. The UE according to claim 14, wherein the uplink channel resource comprises a time-frequency resource used for random access.

## Patentansprüche

1. Direktzugriffsverfahren, umfassend:
Empfangen (S101), durch eine Netzwerkvorrichtung, von Identifizierungsinformationen, die von Verbindungsaufbauursacheinformationen verschieden sind und die von einem Benutzergerät UE gemäß einem Zugriffsstatus des UE gesendet werden, wobei der Zugriffsstatus einer von verschiedenen Zugriffsstatus in verschiedenen Anwendungsszenarien ist, wobei die Anwendungsszenarien Szenarien umfassen, bei denen das UE zunächst auf ein Netzwerk zugreift, eine Verbindung unterbrochen wird und das UE neuerlich auf das Netzwerk zugreift, das UE auf das Netzwerk zugegriffen hat, aber keine Uplink-Kanal-Ressource vorhanden ist, und das UE neuerlich auf das Netzwerk zugreift, um eine Ressource zu beantragen, oder eine Zellenübergabe durchgeführt oder eine Basisstation neuerlich ausgewählt wird;
Zuweisen (S102), durch die Netzwerkvorrichtung, einer ersten Zugriffsnetzwerkkennung zu dem UE gemäß den Identifizierungsinformationen;
Senden (S103), durch die Netzwerkvorrichtung, der ersten Zugriffsnetzwerkkennung an das UE; und
Zuweisen (S104), durch die Netzwerkvorrichtung, einer Ressource zu dem UE gemäß der ersten Zugriffsnetzwerkkennung.

2. Verfahren nach Anspruch 1, wobei das Empfangen (S101), durch die Netzwerkvorrichtung, der Identifizierungsinformationen, die durch das Benutzergerät UE gemäß dem Zugriffsstatus gesendet werden, umfasst:
Empfangen (S201), durch die Netzwerkvorrichtung, der Identifizierungsinformationen, die durch das UE gemäß dem Zugriffsstatus durch Verwendung einer Uplink-Kanal-Ressource gesendet werden.

3. Verfahren nach Anspruch 2, wobei die Uplink-Kanal-Ressource eine Zeit-Frequenz-Ressource umfasst, die für direkten Zugriff verwendet wird.

4. Verfahren nach Anspruch 2 oder 3, wobei das Verfahren ferner umfasst:
Empfangen (S202), durch die Netzwerkvorrichtung, von Pufferstatusbericht(BSR)-Informationen, die durch das UE durch Verwendung der Uplink-Kanal-Ressource gesendet werden, wobei die BSR-Informationen eine Größe von zu sendenden Daten des UE umfassen; und
das Zuweisen, durch die Netzwerkvorrichtung, der ersten Zugriffsnetzwerkkennung zu dem UE gemäß den Identifizierungsinformationen umfasst:
Zuweisen (S203), durch die Netzwerkvorrichtung, der ersten Zugriffsnetzwerkkennung zu dem UE gemäß den Identifizierungsinformationen und den BSR-Informationen.

5. Direktzugriffsverfahren, umfassend:
Senden (S501), durch ein Benutzergerät UE, von Identifizierungsinformationen, die von Verbindungsaufbauursacheinformationen verschieden sind, an eine Netzwerkvorrichtung gemäß einem Zugriffsstatus des UE, wobei der Zugriffsstatus einer von verschiedenen Zugriffsstatus in verschiedenen Anwendungsszenarien ist, wobei die Anwendungsszenarien Szenarien umfassen, bei denen das UE zunächst auf ein Netzwerk zugreift, eine Verbindung unterbrochen wird und das UE neuerlich auf das Netzwerk zugreift, das UE auf das Netzwerk zugegriffen hat, aber keine Uplink-Kanal-Ressource vorhanden ist, und das UE neuerlich auf das Netzwerk zugreift, um eine Ressource zu beantragen, oder eine Zellenübergabe durchgeführt oder eine Basisstation neuerlich ausgewählt wird; und
Empfangen (S502), durch das UE, einer ersten Zugriffsnetzwerkkennung, die durch die Netzwerkvorrichtung gesendet wird, wobei die erste Zugriffsnetzwerkkennung eine Zugriffsnetzwerkkennung ist, die durch die Netzwerkvorrichtung dem UE gemäß den Identifizierungsinformationen zugewiesen wird, und die erste Zugriffsnetzwerkkennung durch die Netzwerkvorrichtung zum Zuweisen einer Ressource zu dem UE verwendet wird.

6. Verfahren nach Anspruch 5, wobei das Senden (S501), durch das UE, der Identifizierungsinformationen an die Netzwerkvorrichtung gemäß dem Zugriffsstatus umfasst:
Senden, durch das UE, der Identifizierungsinformationen an die Netzwerkvorrichtung gemäß dem Zugriffs status durch Verwendung einer Uplink-Kanal-Ressource.

7. Verfahren nach Anspruch 6, wobei die Uplink-Kanal-Ressource eine Zeit-Frequenz-Ressource umfasst, die für direkten Zugriff verwendet wird.

8. Verfahren nach Anspruch 6 oder 7, wobei das Verfahren ferner umfasst:
Senden, durch das UE, von Pufferstatusberichts(BSR)-Informationen an die Netzwerkvorrichtung durch Verwendung der Uplink-Kanal-Ressource, wobei die BSR-Informationen durch die Netzwerkvorrichtung zum Zuweisen der ersten Zugriffsnetzwerkkennung zu dem UE unter Bezugnahme auf die Identifizierungsinformationen verwendet werden und die BSR-Informationen eine Größe von zu sendenden Daten des UE umfassen.

9. Netzwerkvorrichtung, umfassend ein Empfangsmodul (901), ein Zuweisungsmodul (902) und ein Sendemodul (903), wobei das Empfangsmodul (901), das Zuweisungsmodul (902) und das Sendemodul (903) hintereinander geschaltet sind; das Empfangsmodul (901) dazu ausgebildet ist: Identifizierungsinformationen zu empfangen, die von Verbindungsaufbauursacheinformationen verschieden sind und die durch ein Benutzergerät UE gemäß einem Zugriffsstatus des UE gesendet werden, wobei der Zugriffsstatus einer von verschiedenen Zugriffsstatus in verschiedenen Anwendungsszenarien ist, wobei die Anwendungsszenarien Szenarien umfassen, bei denen das UE zunächst auf ein Netzwerk zugreift, eine Verbindung unterbrochen wird und das UE neuerlich auf das Netzwerk zugreift, das UE auf das Netzwerk zugegriffen hat, aber keine Uplink-Kanal-Ressource vorhanden ist, und das UE neuerlich auf das Netzwerk zugreift, um eine Ressource zu beantragen, oder eine Zellenübergabe durchgeführt oder eine Basisstation neuerlich ausgewählt wird, und die Identifizierungsinformationen an das Zuweisungsmodul (902) zu senden;
das Zuweisungsmodul (902) dazu ausgebildet ist: dem UE eine erste Zugriffsnetzwerkkennung gemäß den Identifizierungsinformationen zuzuweisen und die erste Zugriffsnetzwerkkennung an das Sendemodul (903) zu senden;
das Sendemodul (903) dazu ausgebildet ist, die erste Zugriffsnetzwerkkennung an das UE zu senden; und
das Zuweisungsmodul (902) ferner dazu ausgebildet ist, dem UE eine Ressource gemäß der ersten Zugriffsnetzwerkkennung zuzuweisen.

10. Netzwerkvorrichtung nach Anspruch 9, wobei:
das Empfangsmodul (901) ferner dazu ausgebildet ist, die Identifizierungsinformationen zu empfangen, die durch das UE gemäß dem Zugriffsstatus durch Verwendung einer Uplink-Kanal-Ressource gesendet werden.

11. Netzwerkvorrichtung nach Anspruch 10, wobei die Uplink-Kanal-Ressource eine Zeit-Frequenz-Ressource umfasst, die für direkten Zugriff verwendet wird.

12. Netzwerkvorrichtung nach Anspruch 10 oder 11, wobei:
das Empfangsmodul (901) ferner dazu ausgebildet ist: Pufferstatusberichts(BSR)-Informationen zu empfangen, die durch das UE durch Verwendung der Uplink-Kanal-Ressource gesendet werden, und die BSR-Informationen an das Zuweisungsmodul (902) zu senden, wobei die BSR-Informationen eine Größe von zu sendenden Daten des UE umfassen; und
das Zuweisungsmodul (902) ferner dazu ausgebildet ist, dem UE die erste Zugriffsnetzwerkkennung gemäß den Identifizierungsinformationen und den BSR-Informationen zuzuweisen.

13. Benutzergerät UE, umfassend ein Sendemodul (1001) und ein Empfangsmodul (1002), wobei das Sendemodul (1001) und das Empfangsmodul (1002) verbunden sind;
das Sendemodul (1001) dazu ausgebildet ist, Identifizierungsinformationen, die von Verbindungsaufbauursacheinformationen verschieden sind, an eine Netzwerkvorrichtung gemäß einem Zugriffsstatus des UE zu senden, wobei der Zugriffsstatus einer von verschiedenen Zugriffsstatus in verschiedenen Anwendungsszenarien ist, wobei die Anwendungsszenarien Szenarien umfassen, bei denen das UE zunächst auf ein Netzwerk zugreift, eine Verbindung unterbrochen wird und das UE neuerlich auf das Netzwerk zugreift, das UE auf das Netzwerk zugegriffen hat, aber keine Uplink-Kanal-Ressource vorhanden ist, und das UE neuerlich auf das Netzwerk zugreift, um eine Ressource zu beantragen, oder eine Zellenübergabe durchgeführt oder eine Basisstation neuerlich ausgewählt wird; und das Empfangsmodul (1002) dazu ausgebildet ist, eine erste Zugriffsnetzwerkkennung zu empfangen, die durch die Netzwerkvorrichtung gesendet wird, wobei die erste Zugriffsnetzwerkkennung eine Zugriffsnetzwerkkennung ist, die dem UE durch die Netzwerkvorrichtung gemäß den Identifizierungsinformationen zugewiesen wird, wobei dem UE eine Ressource durch die Netzwerkvorrichtung durch Verwendung der ersten Zugriffsnetzwerkkennung zugewiesen wird.

14. UE nach Anspruch 13, wobei:
das Sendemodul (1001) ferner dazu ausgebildet ist, die Identifizierungsinformationen gemäß dem Zugriffsstatus durch Verwendung einer Uplink-Kanal-Ressource an die Netzwerkvorrichtung zu senden.

15. UE nach Anspruch 14, wobei die Uplink-Kanal-Ressource eine Zeit-Frequenz-Ressource umfasst, die für direkten Zugriff verwendet wird.

## Revendications

1. Procédé d'accès aléatoire, comprenant :
la réception (S101), par un dispositif de réseau, d'informations d'identification, qui sont différentes d'informations de cause d'établissement de connexion et qui sont envoyées par un équipement utilisateur, UE, selon un état d'accès de l'UE, l'état d'accès étant un de différents états d'accès dans différents scénarios d'application, les scénarios d'application comprenant des scénarios dans lesquels l'UE accède initialement à un réseau, une connexion est interrompue et l'UE accède au réseau à nouveau, l'UE a accédé au réseau mais il n'y a aucune ressource de canal de liaison montante et l'UE accède au réseau à nouveau pour faire une demande de ressource, ou un transfert cellulaire est réalisé ou une station de base est resélectionnée ;
l'attribution (S102), par le dispositif de réseau, d'un premier identifiant de réseau d'accès à l'UE selon les informations d'identification ;
l'envoi (S103), par le dispositif de réseau, du premier identifiant de réseau d'accès à l'UE ; et
l'attribution (S104), par le dispositif de réseau, d'une ressource à l'UE selon le premier identifiant de réseau d'accès.

2. Procédé selon la revendication 1, dans lequel la réception (S101), par le dispositif de réseau, des informations d'identification, qui sont envoyées par l'équipement utilisateur, UE, selon l'état d'accès, comprend :
la réception (S201), par le dispositif de réseau, des informations d'identification envoyées par l'UE selon l'état d'accès en utilisant une ressource de canal de liaison montante.

3. Procédé selon la revendication 2, dans lequel la ressource de canal de liaison montante comprend une ressource temps-fréquence utilisée pour l'accès aléatoire.

4. Procédé selon la revendication 2 ou 3, dans lequel le procédé comprend en outre :
la réception (S202), par le dispositif de réseau, d'informations de rapport d'état de tampon, BSR, envoyées par l'UE en utilisant la ressource de canal de liaison montante, dans lequel les informations de BSR comprennent une taille de données, destinées à être envoyées, de l'UE ; et
l'attribution, par le dispositif de réseau, du premier identifiant de réseau d'accès à l'UE selon les informations d'identification comprend :
l'attribution (S203), par le dispositif de réseau, du premier identifiant de réseau d'accès à l'UE selon les informations d'identification et les informations de BSR.

5. Procédé d'accès aléatoire, comprenant :
l'envoi (S501), par un équipement utilisateur, UE, d'informations d'identification, qui sont différentes d'informations de cause d'établissement de connexion, à un dispositif de réseau selon un état d'accès de l'UE, l'état d'accès étant un de différents états d'accès dans différents scénarios d'application, les scénarios d'application comprenant des scénarios dans lesquels l'UE accède initialement à un réseau, une connexion est interrompue et l'UE accède au réseau à nouveau, l'UE a accédé au réseau mais il n'y a aucune ressource de canal de liaison montante et l'UE accède au réseau à nouveau pour faire une demande de ressource, ou un transfert cellulaire est réalisé ou une station de base est resélectionnée ; et
la réception (S502), par l'UE, d'un premier identifiant de réseau d'accès envoyé par le dispositif de réseau, dans lequel le premier identifiant de réseau d'accès est un identifiant de réseau d'accès attribué par le dispositif de réseau à l'UE selon les informations d'identification, et le premier identifiant de réseau d'accès est utilisé par le dispositif de réseau pour l'attribution d'une ressource à l'UE.

6. Procédé selon la revendication 5, dans lequel l'envoi (S501), par l'UE, des informations d'identification au dispositif de réseau selon l'état d'accès comprend :
l'envoi, par l'UE, des informations d'identification au dispositif de réseau selon l'état d'accès en utilisant une ressource de canal de liaison montante.

7. Procédé selon la revendication 6, dans lequel la ressource de canal de liaison montante comprend une ressource temps-fréquence utilisée pour l'accès aléatoire.

8. Procédé selon la revendication 6 ou 7, dans lequel le procédé comprend en outre :
l'envoi, par l'UE, d'informations de rapport d'état de tampon, BSR, au dispositif de réseau en utilisant la ressource de canal de liaison montante, dans lequel les informations de BSR sont utilisées par le dispositif de réseau pour l'attribution du premier identifiant de réseau d'accès à l'UE en référence aux informations d'identification, et les informations de BSR comprennent une taille de données, destinées à être envoyées, de l'UE.

9. Dispositif de réseau, comprenant un module de réception (901), un module d'attribution (902), et un module d'envoi (903), dans lequel le module de réception (901), le module d'attribution (902), et le module d'envoi (903) sont successivement connectés ;
le module de réception (901) est configuré pour: recevoir des informations d'identification, qui sont différentes d'informations de cause d'établissement de connexion et qui sont envoyées par un équipement utilisateur, UE, selon un état d'accès de l'UE, l'état d'accès étant un de différents états d'accès dans différents scénarios d'application, les scénarios d'application comprenant des scénarios dans lesquels l'UE accède initialement à un réseau, une connexion est interrompue et l'UE accède au réseau à nouveau, l'UE a accédé au réseau mais il n'y a aucune ressource de canal de liaison montante et l'UE accède au réseau à nouveau pour faire une demande de ressource, ou un transfert cellulaire est réalisé ou une station de base est resélectionnée, et envoyer les informations d'identification au module d'attribution (902) ;
le module d'attribution (902) est configuré pour : attribuer un premier identifiant de réseau d'accès à l'UE selon les informations d'identification, et envoyer le premier identifiant de réseau d'accès au module d'envoi (903) ;
le module d'envoi (903) est configuré pour envoyer le premier identifiant de réseau d'accès à l'UE ; et
le module d'attribution (902) est en outre configuré pour attribuer une ressource à l'UE selon le premier identifiant de réseau d'accès.

10. Dispositif de réseau selon la revendication 9, dans lequel :
le module de réception (901) est en outre configuré pour recevoir les informations d'identification envoyées par l'UE selon l'état d'accès en utilisant une ressource de canal de liaison montante.

11. Dispositif de réseau selon la revendication 10, dans lequel la ressource de canal de liaison montante comprend une ressource temps-fréquence utilisée pour l'accès aléatoire.

12. Dispositif de réseau selon la revendication 10 ou 11, dans lequel :
le module de réception (901) est en outre configuré pour : recevoir des informations de rapport d'état de tampon, BSR, envoyées par l'UE en utilisant la ressource de canal de liaison montante, et envoyer les informations de BSR au module d'attribution (902), dans lequel les informations de BSR comprennent une taille de données, destinées à être envoyées, de l'UE ; et
le module d'attribution (902) est en outre configuré pour attribuer le premier identifiant de réseau d'accès à l'UE selon les informations d'identification et les informations de BSR.

13. Équipement utilisateur, UE, comprenant un module d'envoi (1001) et un module de réception (1002), dans lequel le module d'envoi (1001) et le module de réception (1002) sont connectés ;
le module d'envoi (1001) est configuré pour envoyer des informations d'identification, qui sont différentes d'informations de cause d'établissement de connexion, à un dispositif de réseau selon un état d'accès de l'UE, l'état d'accès étant un de différents états d'accès dans différents scénarios d'application, les scénarios d'application comprenant des scénarios dans lesquels l'UE accède initialement à un réseau, une connexion est interrompue et l'UE accède au réseau à nouveau, l'UE a accédé au réseau mais il n'y a aucune ressource de canal de liaison montante et l'UE accède au réseau à nouveau pour faire une demande de ressource, ou un transfert cellulaire est réalisé ou une station de base est resélectionnée ; et
le module de réception (1002) est configuré pour recevoir un premier identifiant de réseau d'accès envoyé par le dispositif de réseau, dans lequel le premier identifiant de réseau d'accès est un identifiant de réseau d'accès attribué par le dispositif de réseau à l'UE selon les informations d'identification, où une ressource est attribuée à l'UE par le dispositif de réseau en utilisant le premier identifiant de réseau d'accès.

14. UE selon la revendication 13, dans lequel :
le module d'envoi (1001) est en outre configuré pour envoyer les informations d'identification au dispositif de réseau selon l'état d'accès en utilisant une ressource de canal de liaison montante.

15. UE selon la revendication 14, dans lequel la ressource de canal de liaison montante comprend une ressource temps-fréquence utilisée pour l'accès aléatoire.
